# EUROPEAN PATENT SPECIFICATION

(11) **EP 1 955 388 B1**
(45) Date of publication and mention of the grant of the patent: **14.04.2010**
(21) Application number: 06808917.6
(22) Date of filing: 28.09.2006
(51) Int. Cl.: H01M 2/10

(54) **SYSTEM FOR FITTING TO A BATTERY A DEVICE FOR THE HANDLING OF SAID BATTERY AND RELATIVE DEVICE AND BATTERY**
SYSTEM ZUM AUSSTATTEN EINER BATTERIE MIT EINER EINRICHTUNG ZUM HANDHABEN DER BATTERIE UND RELATIVE EINRICHTUNG UND BATTERIE
SYSTÈME POUR L'ADAPTATION À UNE BATTERIE D'UN DISPOSITIF DESTINÉ À LA GESTION DE LADITE BATTERIE ET DISPOSITIF ET BATTERIE CORRESPONDANTS

(30) Priority: 03.10.2005 IT VI20050252
(43) Date of publication of application: 13.08.2008
(73) Proprietor: Stocchiero, Franco, 36050 Montorso Vicentino (VI) (IT)
(72) Inventor: Stocchiero, Franco, 36050 Montorso Vicentino (VI) (IT)
(74) Representative: Terreran, Gabrio
(86) International application number: PCT/IB2006/002729
(87) International publication number: WO 2007/039801

(56) References cited:
- FR-A1- 2 681 981
- JP-A- 61 250 967
- US-A- 1 574 790
- US-A- 4 752 543
- US-A- 6 022 638

## Description

The invention concerns a system for fitting to a battery a device for handling it and a relative device and battery.

The system and the device proposed are particularly suitable for application to the cover of a battery.

As is known, the casing of a battery, and in particular of a starter or tractor battery, consists of a cover that closes a container provided internally with a plurality of partition walls. These identify the cells inside which the electrodes or positive and negative plates that form the battery elements are arranged, immersed in the electrolyte. The cover is generally provided with a plurality of holes, one for each cell, closed by corresponding plugs, which permit the supply of top-up liquids to each cell.

The cover is generally applied to the container by means of a heat-sealing process which involves all the points of contact with the container and therefore the perimeter edge of the container and the upper ends of the partition walls.

To facilitate lifting and transport of said batteries, some covers are furthermore provided with one or more devices for handling the batteries, also called handles that facilitate lifting and handling of the battery see e.g. US 6 022 638.

Said handles consist of a U-shaped element provided with two through holes made at the ends of the two arms of the U, each suitable for receiving a corresponding pin provided on the cover.

Said connection system allows the handle to rotate around an axis and to assume a compact rest position, horizontally collapsed, and a vertical operating position, necessary to permit gripping of the handle.

The number of handles with which the battery is provided varies according to the dimensions of the battery and the load they have to withstand during the lifting and transport phases.

Each handle is generally applied manually to the cover.

A first drawback of the connection system described consists in the fact that the coupling of the pin to each hole must be sufficiently accurate and precisely fitting to prevent detachment of the handle during lifting.

A further drawback, linked to the preceding one, consists in the fact that the rotation of the handle around the above-mentioned axis is not easy due to the friction that develops between the pin and the wall of the hole. This makes it difficult to raise the handle from the rest position to the vertical operating position.

A further drawback consists in the fact that the known connection systems cannot be positioned at any point on the cover.

A further drawback, linked to the preceding one, consists in the fact that the connection pins are generally arranged in the vicinity of the areas where the cover is sealed to the container. This means that during the lifting phase, the connection pins discharge the weight of the battery onto said sealed areas, stressing them and at times damaging them. A further drawback lies in that assembly of the handle generally requires the intervention of an operator, thus significantly affecting the cost of the battery.

The object of the present invention is to overcome said drawbacks.

In particular, a first object of the invention is to provide a system for fitting to a battery a device for the handling of said battery, as well as a relative device and battery, which are dependable and facilitate raising of the device from the rest position to the operating position, thus guaranteeing the necessary reliability and sturdiness.

A further object of the invention is to provide a dependable, simple and inexpensive fitting system.

A further object of the invention is to propose a fitting system that can be provided substantially at any point on the cover or container of a battery.

Another object of the invention is to provide a device which is dependable and can be anchored to the cover of a battery at any point.

A further object of the invention is to provide a fitting system and a device which, in the rest position, do not protrude from the upper surface of the cover.

A further object of the invention is to provide a device which, compared to the known handles, can be raised more easily to the operating position by the user.

A further object of the invention is to provide a fitting system that permits application of the lifting device to the relative cover, without the need for tools and in a simple quick manner.

Another object of the invention is to provide a fitting system, a device and a battery that have a low production cost.

A further object of the invention is to provide a fitting system, a device and a battery, the application of which is quick and easy and can also be performed automatically by mechanical actuators also directly on the cover and/or battery production line.

A further object of the invention is to provide a fitting system and device that withstand greater loads than the analogous handles of known type.

A further object of the invention is to provide a fitting system and a device that can be easily removed from the battery.

A further object of the invention is to provide a fitting system that permits simplification of the mould for the production of said covers, compared to the functionally analogous covers of known type.

Said objects have been achieved through the implementation of a system for fitting to a battery a device for the handling thereof, a device for the handling of a battery and a battery, described and characterised in the respective independent claims. Advantageous embodiments of the invention constitute the subject of the dependent claims.

Advantageously, the solution proposed permits arrangement of the anchoring points of the device at any point on the battery cover. This advantageously enables the distribution of weight on the device to be improved and therefore offers greater safety and ease of transport of the battery.

Again advantageously, with the solution proposed the most suitable areas can be chosen for discharging the stress supported by the connection system, and the anchoring points can be arranged well away from the sealed areas, thus significantly reducing the risk of damaging them.

In fact, the connection system proposed can be provided in the areas of the cover between two cells, thus advantageously obtaining discharge of the weight supported on two adjacent seals and reducing the risk of damaging the seals.

Again advantageously, the simplicity of assembly of the device on the cover means that it can be installed at any time, also by the user, thus also permitting optimisation of storage of the various parts of the battery.

Said objects and advantages will be highlighted in greater detail in the description of some preferred embodiments of the invention, provided by way of non-limiting examples, with reference to the attached drawings, wherein:
- Figure 1 shows a lateral view of a battery with a device for the handling thereof, subject of the invention, in an operating position and provided with a fitting system also subject of the invention;
- Figure 2 shows a different lateral view of the battery and the device shown in Figure 1;
- Figure 3 shows an elevation view of the battery of Figure 1 with the device arranged in a horizontal rest position;
- Figure 4 shows a lateral view of the device of Figure 1;
- Figure 5 shows a section along the horizontal plane A-A of Figure 1 of the device and part of the battery cover, before fitting, in which the fitting system can be seen more clearly;
- Figure 6 shows a section along the vertical plane B-B of Figure 2 of the device and part of the battery cover, before fitting, in which the fitting system can be seen more clearly;
- Figure 7 shows a partial enlarged section view of part of the fitting system of Figure 5;
- Figure 8 shows an enlarged section view of another part of the fitting system shown in Figure 5;
- Figure 9 shows an enlarged section view of a part of the fitting system shown in Figure 6;
- Figure 10 shows a lateral view of another embodiment of a device carried out according to the invention;
- Figure 11 shows a lateral view of a further embodiment of a device carried out according to the invention;
- Figure 12 shows an elevation view of the battery and the device of Figure 1 before fitting;
- Figures 13 to 16 each show a section along the horizontal plane A-A of Figure 1 of some parts of the system of the invention, during fitting of the device to the battery;
- Figure 17 shows an elevation view of the battery and the device once fitting has been performed;
- Figure 18 shows a section view along the horizontal plane A-A of Figure 1 of the cover and the device once fitting has been performed;
- Figure 19 shows a lateral view of the battery cover and the device of Figure 1 once fitting has been performed, in the operating position;
- Figure 20 shows a section view of the cover and the device along the plane B-B of Figure 19;
- Figures 21 and 22 each show a view of an enlarged section of some parts of the fitting system when the device is arranged in the operating position shown in Figure 20;
- Figure 23 shows a lateral view of a further embodiment of a device carried out according to the invention.

By way of introduction, it should be noted that the same parts of the individual embodiments have the same reference numbers. If the position of an element is varied, the position indications given in the individual examples of embodiment must be transferred to the new position.

Although the embodiments described herein refer to lead acid batteries, it is clear that the solution proposed can also be applied to other types of batteries.

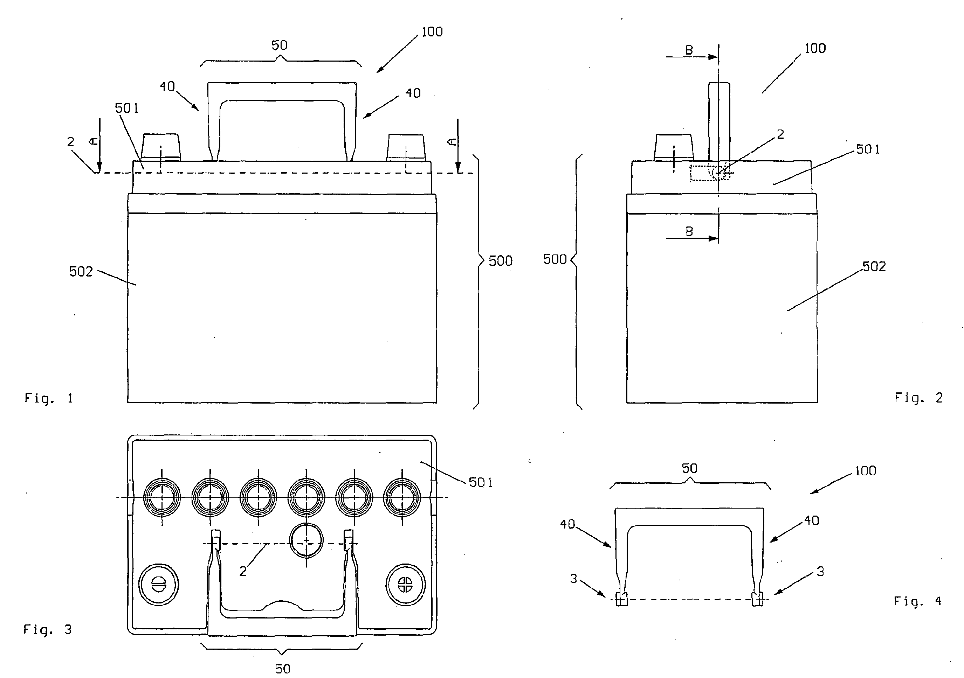

A system for fitting a battery handling device 100 to a battery 500, subject of the invention, is shown in Figures 1 to 4.

In the case in point the battery 500 comprises a casing with a cover 501 to which the device 100 is applied, which closes a container 502 provided internally with a plurality of partition walls, not shown herein, to define the cells inside which the electrodes forming the elements of the battery are arranged, immersed in the electrolyte.

The device 100 comprises, as can be better seen in Figures 4, 5 and 6, part of a fitting system proposed and a gripping element 50 which, in the example of embodiment shown and as will be better seen below, consists of an element of the fitting system. The fitting system shown furthermore allows the device 100 to rotate around a substantially horizontal axis 2 to move the gripping element 50, as will be better seen below, from a substantially horizontal rest position, shown in Figure 3, to at least one operating position, one of which is shown in particular in Figures 1 and 2.

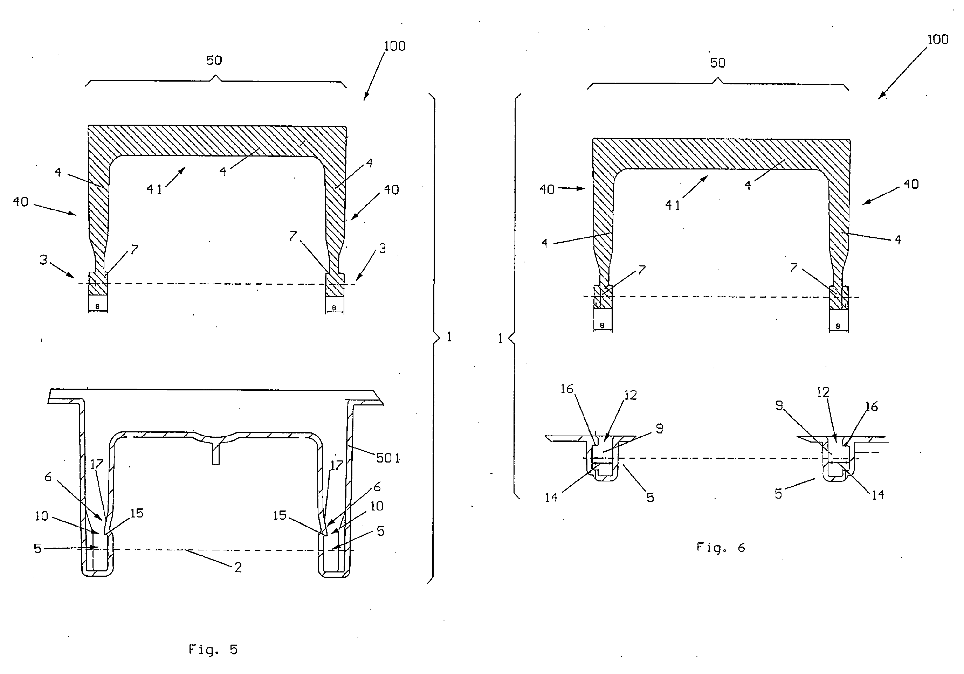

Said system, indicated as a whole by 1 in Figures 5 and 6, comprises at least one connection element 3 suitable for being accommodated in a corresponding housing 5.

In particular, in the embodiment shown there are two connection elements 3, joined by a spacer element 4 and suitable for being accommodated in as many equally spaced housings 5.

Said housings 5 are obtained, in the embodiment shown, in the cover 501 of the battery 500.

According to the invention, the system 1 furthermore comprises guide means 6 suitable for guiding each element 3 during application of the device 100 to the battery 500, to move it from its natural position and overcome a narrowing 10 of the housing 5, permitting insertion in the respective housing 5, with subsequent return to the natural position, thus obtaining anchoring of the device 100 to the battery 500.

It should be observed that, in the particular embodiment shown, the elastic movement of the elements 3 moves them away from each other.

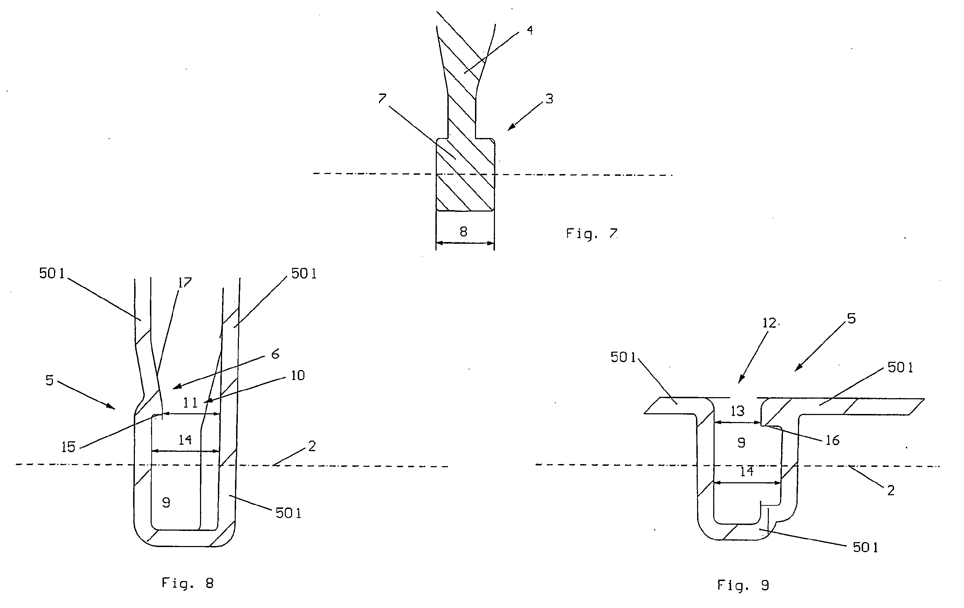

As regards the connection elements 3, each of them comprises a substantially cylindrical body 7, shown in detail in Figure 7, provided at the two ends of the spacer element 4, whose length 8 is such as to enable it to be accommodated in the corresponding housing 5.

Each housing 5 comprises a cavity 9, substantially cylindrical and substantially coaxial to the axis 2, which continues through the above-mentioned narrowing or first passage 10 of width 11, visible in detail in Figure 8, developing in the lateral part of the cavity 9, and through a second passage 12 of width 13, visible in detail in Figure 9, involving the upper part of the cavity 9.

It should be observed that the length 14 of the cavity 9 is greater than the width 11 and 13 of the passages 10 and 12 and that the width 11 of the first passage 10 is substantially equal to the length 8 of the body 7.

Since the length 14 of the cavity 9 is greater than the length 8 of the cylindrical body 7, in the transit area between cavity 9 and passages 10, 12, there are two shoulders or teeth, indicated respectively by the numbers 15 and 16, against which the connection element 3 and in particular the cylindrical surface of the body 7 rest.

It should furthermore be observed, as will be better seen below, that the first passage 10 advantageously permits insertion in the cavity 9 of the element 3, while the second passage 12 advantageously permits rotation of the device 100 around the axis 2.

As regards the guide means 6, they comprise, in the embodiment shown, two substantially flat surfaces 17 provided on the cover 501 of the battery 500, visible in detail in Figures 5 and 8, each of which develops on a plane crosswise to the axis of rotation 2.

The surfaces 17 are arranged near each housing 4 and in particular near the first passage 10.

As regards the spacer element 4, in the embodiment shown it is substantially U-shaped and comprises two substantially parallel parts 40, each provided at one end with a connection element 5 and having the other end integral with a part 41 crosswise to the others which, in the case in point, constitutes the gripping element 50.

The spacer element 4 is made of a material and/or in a shape such as to give the parts 40 an elasticity which, during application of the device 100 to the battery 500, keeps the connection elements 3 apart.

In a preferred embodiment of the invention, the spacer element 4 is made of moulded plastic.

It is clear that in other embodiments it can have a different geometrical shape, for example the shape of an arc, and be made of another material.

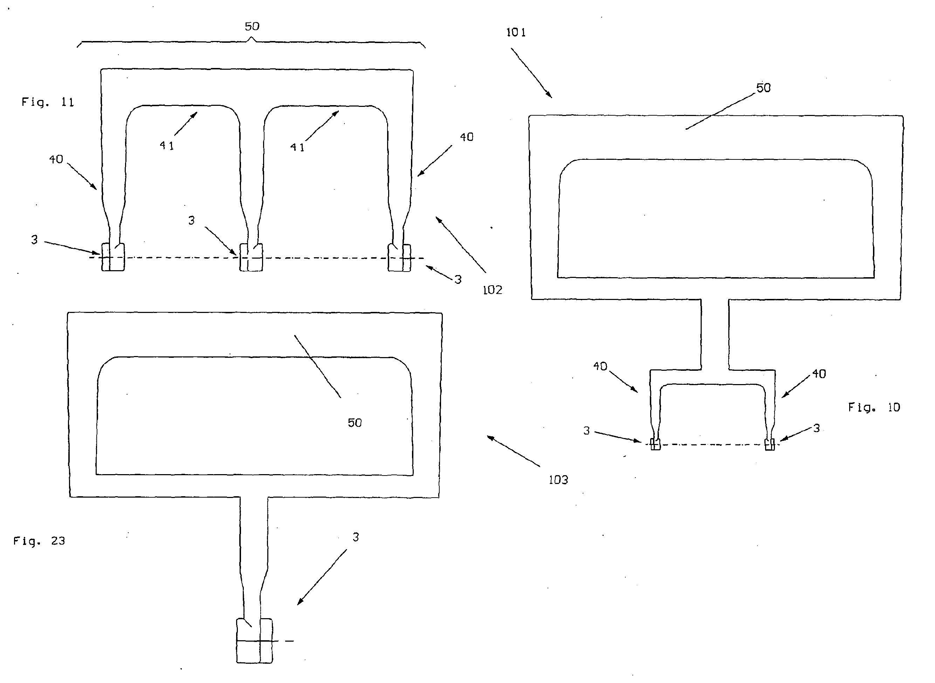

Another embodiment of a device for the handling of a battery carried out according to the invention, indicated as a whole by number 101 in Figure 10, differs from the preceding one due to the fact that the gripping element 50 does not consist of a part of the fitting system 1.

A further embodiment of a device for the handling of a battery carried out according to the invention, indicated as a whole by number 102 in Figure 11, differs from the preceding one due to the fact that the fitting system comprises three connection elements 3 provided on as many parts 40 or parallel arms. This advantageously permits increase in the lifting capacity of the device and selection of the areas of the battery most suitable for withstanding the stress during handling thereof.

Again advantageously, the system allows the third arm to be positioned also near the centre of the battery, resulting in greater balance during transport of the same. Assembly of the device on the battery will be described below with reference to the first of the embodiments described, shown in Figures 1 to 9, there being no substantial differences with respect to the other embodiments.

A further embodiment of a device with a fitting system carried out according to the invention, indicated as a whole by 103 in Figure 23, differs from the preceding ones due to the fact that it comprises only one connection element 3 suitable for being accommodated in a corresponding housing 5.

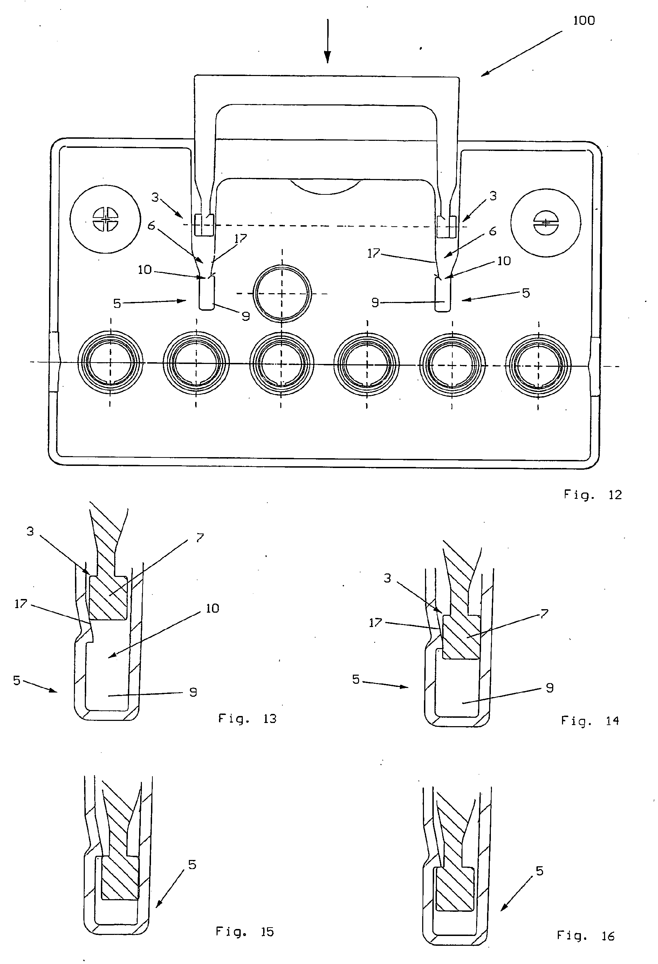

According to the invention, on assembly the device 100 is positioned with the connection elements 3 facing the first passage 10, as shown in detail in Figure 12, and said device is moved towards the housings 5.

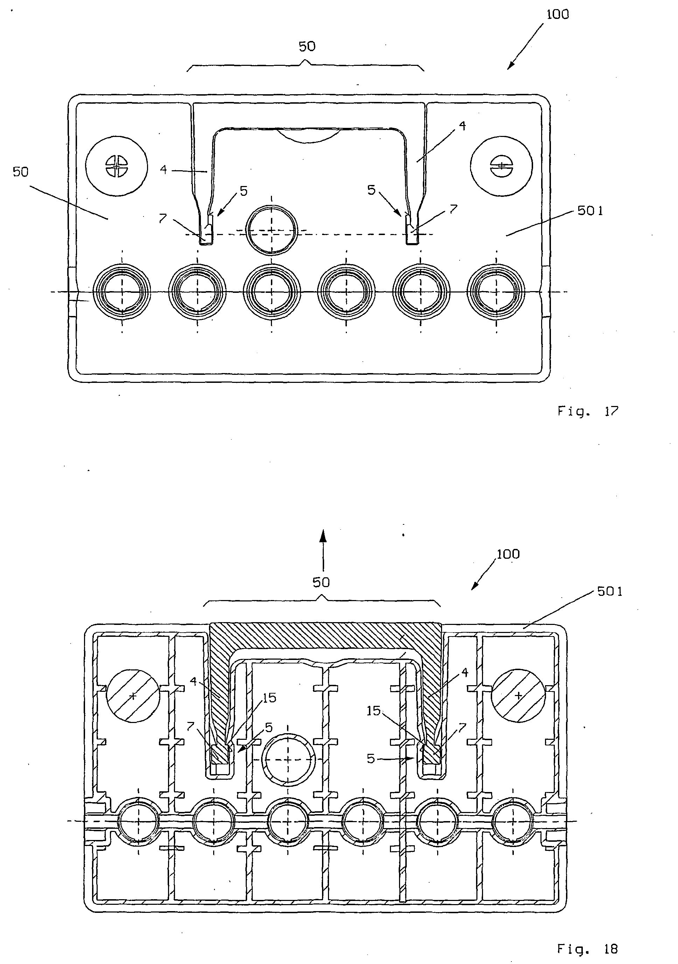

Said movement brings the connection elements 3 into contact with the plane 17 which, due to the elasticity of the element 3 and/or of the spacer element 4, gradually moves each of the elements 3 away from their natural rest position, as shown in detail in Figures 13 and 14, until they are aligned with the corresponding first passage 10. Continuing its movement, the connection element 3 crosses the first passage 10 and reaches the cavity 9, overcoming the first shoulder or tooth 15. This causes elastic return to the initial position of the two connection elements 3, which are thus positioned at the initial distance which is shorter than the distance between the first two passages 10, obtaining snap fitting of the device 100, as shown in Figures 16 and 17.

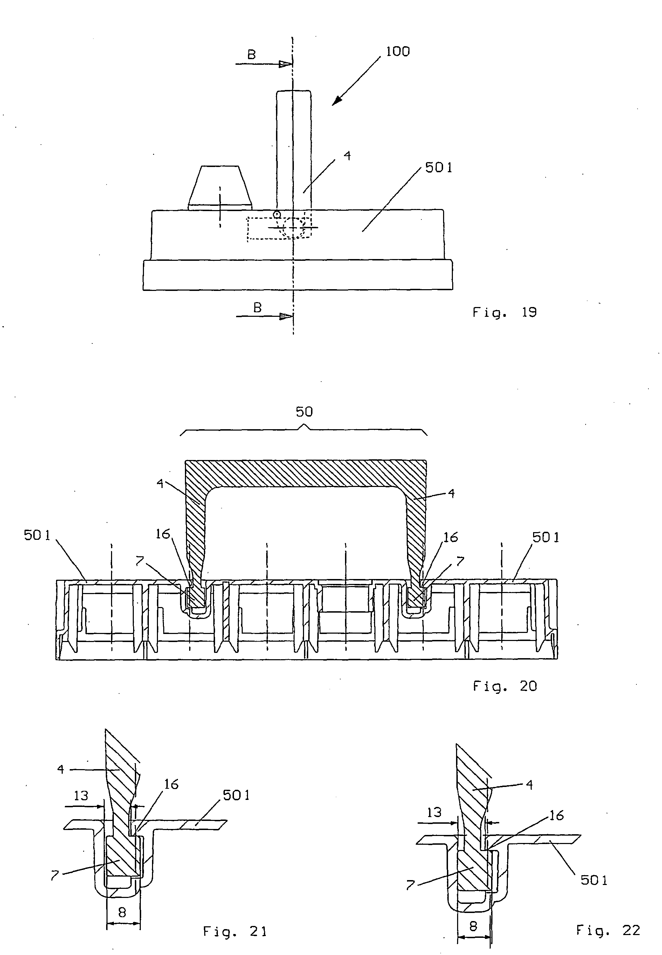

As can be observed, any attempt to extract the device 100 by moving it in a direction opposite to the previous one is hindered by the first shoulder 15 or tooth, as can be seen in Figures 16 and 18; the shoulder 15 counteract the surface of the body 7 and, once fitting has been obtained, prevents the element 3 from coming out of the housing 5. Once the fitting has been obtained, the device 100 can rotate around the axis 2 to be set, for example, to the vertical operating position shown in Figures 19 and 20.

In said position the user can hold the device 100 by gripping the element 50 and then raise and handle the battery 500.

In said situation the second shoulder 16 prevents the element 3 from coming out of the housing 5 in addition to supporting the weight of the battery 500.

The solution advantageously comprises two separate shoulders 15 and 16 provided on opposite parts of the same seat 5, which perform the same functions in different situations, more precisely each of them is respectively suitable for preventing the element 3 from coming out of the seat 5 when the device is in the horizontal position and when the battery is lifted/transported.

In this regard it should be furthermore observed that, as can be seen also in the enlarged views of Figure 21 and 22, since the width 13 of the second passage 12 is narrower than the length 8 of the cylindrical body 7, even a possible movement of the body 7 inside the cavity 9 would not cause the connection element 3 to come out of the housing 5. This also advantageously permits a certain slack to be maintained in the coupling between the body 7 and the cavity 9 which allows for reduction of the friction that develops during rotation of the device 100 around the axis 2, facilitating the movement thereof.

It should furthermore be observed that advantageously the device 100 can be fitted to the battery also by setting the device 100 to an initial position different from the horizontal one shown. The fitting can in fact be obtained also by setting the device 100 to a different initial position with respect to the axis 2, for example the vertical position. Here again the user only has to position the elements 3 at the level of each seat 5 and move the device 100 bringing the elements 3 towards the respective housings 5, to obtain the above.

If necessary, to release the device 100 from the battery 500, the user must use a tool, moving the connection elements 3 away from each other until they are aligned with the respective first passages 10, and simultaneously move the device 100 in the direction opposite the previous one.

A further embodiment of the fitting system not shown herein differs from the preceding ones due to the fact that the connection elements are provided on the cover and/or on the container of the battery and the corresponding housing is integral with the device. From the above it is clear that, in said case, during application of the device to the battery, it is the housings 5 that move away from each other and not the connection elements 3.

A further embodiment of the invention not shown herein differs from the preceding ones due to the fact that the first passages 10 are positioned at a distance from each other that is shorter than the distance between the corresponding connection elements 3. In this case the guide means 6 act during fitting of the device to the battery, moving the two connection elements 3 and/or the housings 5 closer until they are aligned with the respective first passages 10 and/or with the respective connection elements 3.

From what has been said, it is clear that the solution proposed eliminates the drawbacks described above and achieves the set objects.

It is clear that the dimensions and shapes of the various components of the fitting system, of the device and of the battery can vary.

The descriptions provided have furthermore shown that application of said handle 3 to the cover 2 is easy and can be performed without the use of any tools, and can be easily automated, also on the production line.

It has advantageously been found that, given the configuration of the connection elements 3 and the seats 5, the device can be easily lifted and gripped by the user.

It should furthermore be observed that it is advantageously possible, as shown also in the examples of embodiment illustrated in the attached drawings, to make in the cover and/or in the container of the battery a compartment suitable for accommodating the device, when it is in the rest position, reducing the overall dimensions thereof.

Lastly it should be observed that the housings 5 and/or the connection elements 3 can be easily obtained by appropriately shaping the mould in which the cover and/or the container of the battery is produced; likewise, it is easy to see that the device and the fitting system proposed are simple to carry out.

It should furthermore be observed that the points for anchoring the fitting system to the battery can be located in any area of the cover 501 and/or of the container 502, and in particular can be positioned, as in the examples of embodiment shown in the attached figures, between one cell and another of the battery or well away from the seals, thus reducing the risk of damaging said seals during handling.

Although the invention has been described with reference to the attached drawings, it can undergo modifications during production, all falling within the same inventive concept expressed in the following claims and therefore protected by the present patent.

## Claims

1. System for fitting to a battery (500) a device (100, 101, 102) for the handing of said battery, said system being rotatable between a substantially horizontal rest position and at least one substantially vertical operating position of the device, said device comprising at least one or two connection elements (3) suitable for being accommodated in at least one or two corresponding housings (5), said system further comprising guide means (6) suitable for guiding said at least one connection element (3) during application of said device (100, 101, 102) to said battery (500) to move it from its natural position and overcome a narrowing (10) of said at least one housing (5), permitting insertion thereof in said at least one housing (5) with subsequent return to the natural position, **characterised in that** said at least one or two connection elements (3) comprise a body (7) suitable for being accommodated in a corresponding cavity (9) of said corresponding housing (5), **in that** an arm extends from said body, and **in that** the upper part of said cavity (9) defines a passage (12) of a width (11, 13) less than the length (14) of said cavity, said passage being therefore adapted to receive said arm in its substantially vertical operating position.

2. A system (1) as claimed in claim 1, **characterised in that** said at least one body (7) of said connection element (3) snap-fits into said at least one housing (5), allowing said device to rotate around at least one axis (2) so as to be rotated between said at least rest position and said at least one second operating position suited to permit gripping thereof.

3. A system (1) as claimed in one of claims 1 and 2, **characterised in that** said guide means (6) are suitable for moving apart said at least two convection elements (3) during application of said device (100,101,102) to said battery (500), to permit the insertion of said connection elements (3) in the respective housings (5).

4. A system as claimed in one of claims 1 and 2, **characterised in that** said guide means (6) are suitable for moving near to each other said housings (5) during application of said device (100, 101, 102) to said battery (500), to permit insertion of the respective connection elements (3).

5. System according to one of claims 1 to 4, **characterised in that** said at least one or two housings (5) comprise a further lateral passage (10) developing laterally from said cavity (9), and suitable for permitting insertion in said cavity (9) of said corresponding body (7) of said element (3).

6. System according to claim 5, **characterised in that** the length (14) of said cavity (9) is greater than the width (11, 13) of said passages (10, 12) thus forming in the transit area between said cavity (9) and said passages (10, 12) two shoulders or teeth (15, 16) suitable for counteracting said body (7) of said connection element (3), once fitting has been performed, to prevent it from coming out of said cavity of said housing (5).

7. System according to one of claims 5 aid 6, **characterised in that** the width (11) of said lateral passage (10) is substantially equal to the length (8) of said body (7).

8. System according to one of claims 5 to 7, **characterised in that** said guide means (6) comprise at least one surface (17) located in said lateral passage cooperating by contact with body (7) of said at least one or two connection elements (3).

9. System according to claim 8, **characterised in that** said at least one surface (17) is arranged in the vicinity of said cavity (9) of said housing (5).

10. System according to one of claims 8 and 9, **characterised in that** said at least one surface (17) is arranged in the vicinity of said lateral passage (10).

11. System according to one of claims 1 to 10 **characterised in that** said body (7) is substantially cilindrical and said cavity (9) is substantially cilindrical.

12. Device (100, 101,102) for handling a battery (500), comprising at least one gripping element (50), **characterised in that** it comprises a fitting system (1) as claimed in one of claims 1 to 11 connected to said gripping element (50).

13. Device according to claim 12, **characterised in that** said at least one or two connection elements (3) of said system (1) are connected to said gripping element and **in that** said at least one or two housings (5) are adapted to be connected to said battery (500).

14. Device according to claim 12, **characterised in that** said at least one or two housings are connected to said gripping element (50) and **in that** said at least one or two connection elements are adapted to be connected to said battery.

15. Device (100) according to one of claims 12 to 14, **characterised in that** said gripping element (50) comprises a spacer element (4) with at least one part (41) connected to the ends of other two substantially parallel parts (40), each provided at one end with at least one of said at least one or two connection elements (3) or at least one of said one or two housings.

16. Device according to claim 15, **characterised in that** said spacer element has an elasticity such as to allow said at least two connection elements and/or at least one of said housings to be elastically moved together or apart.

17. Device according to one of claims 12 to 16, **characterised in that** it comprises at least one rotation axis (2) for said device to allow said device to move from at least one rest position with minimum overall dimensions to at least one second operating position to permit gripping thereof.

18. Battery (500), comprising a casing and a device for the handling thereof, **characterised in that** said battery comprises a device as claimed in one of claims 12 to 17.

19. Battery according to claim 18, **characterised in that** said casing has a compartment suitable for accommodating said device (100, 101, 102) when the latter is arranged in said rest position, reducing the overall dimensions thereof.

20. Battery (500) according to claim 19, **characterised in that** said fitting system is provided partly on the cover (501) or the container (502) of said casing.

21. Battery (500) according to one of claims 18 to 20, **characterised in that** the parts of said fitting system provided on said battery are positioned between one cell and another of said battery and/or well away from the sealed areas of said battery.

## Patentansprüche

1. System zum Befestigen an einem Akkumulator (500) einer Vorrichtung (100, 101, 102) zum Handhaben des Akkumulators, wobei das System zwischen einer im Wesentlichen horizontalen Ruhestellung und mindestens einer im Wesentlichen vertikalen Betriebsstellung der Vorrichtung drehbar ist, wobei die Vorrichtung mindestens ein oder zwei Verbindungselemente (3) umfasst, die dazu geeignet sind, in mindestens einem oder zwei entsprechenden Gehäusen (5) untergebracht zu werden, wobei das System ferner Führungsmittel (6) umfasst, die dazu geeignet sind, das mindestens eine Verbindungselement (3) während des Anbringens der Vorrichtung (100, 101, 102) an den Akkumulator (500) zu führen, um es von seiner natürlichen Stellung aus zu bewegen und eine Verengung (10) des mindestens einen Gehäuses (5) zu überwinden, um seine Einführung in das mindestens eine Gehäuse (5) mit anschließender Rückkehr in die natürliche Stellung zuzulassen, **dadurch gekennzeichnet, dass** das/die mindestens eine oder zwei Verbindungselemente (3) einen Körper (7) umfassen, der dazu geeignet ist, in einer entsprechenden Aushöhlung (9) des entsprechenden Gehäuses (5) untergebracht zu werden, dass sich ein Arm vom Körper aus erstreckt und dass der obere Abschnitt der Aushöhlung (9) einen Durchlass (12) von einer Breite (11, 13) definiert, die geringer als die Länge (14) der Aushöhlung ist, wodurch der Durchlass dazu geeignet ist, den Arm in seiner im Wesentlichen vertikalen Betriebsstellung aufzunehmen.

2. System (1) nach Anspruch 1, **dadurch gekennzeichnet, dass** der mindestens eine Körper (7) des Verbindungselements (3) in das mindestens eine Gehäuse (5) einschnappt, wobei es der Vorrichtung ermöglicht ist, sich um mindestens eine Achse (2) zu drehen, um zwischen der mindestens einen Ruhstellung und der mindestens einen zweiten Betriebsstellung, die dazu geeignet ist, ihr Greifen zuzulassen, gedreht zu werden.

3. System (1) nach einem der Ansprüche 1 oder 2, **dadurch gekennzeichnet, dass** die Führungsmittel (6) dazu geeignet sind, die mindestens zwei Verbindungselemente (3) während des Anbringens der Vorrichtung (100, 101, 102) an den Akkumulator (500) auseinander zu bewegen, um das Einführen der Verbindungselemente (3) in die jeweiligen Gehäuse (5) zuzulassen.

4. System nach einem der Ansprüche 1 oder 2, **dadurch gekennzeichnet, dass** die Führungsmittel (6) dazu geeignet sind, die Gehäuse (5) während des Anbringens der Vorrichtung (100, 101, 102) an den Akkumulator (500) nah zueinander zu bewegen, um das Einführen der jeweiligen Verbindungselemente (3) zuzulassen.

5. System nach einem der Ansprüche 1 bis 4, **dadurch gekennzeichnet, dass** das/die mindestens eine oder zwei Gehäuse (5) einen weiteren seitlichen Durchlass (10) umfassen, der sich seitlich von der Aushöhlung (9) aus erstreckt und dazu geeignet ist, das Einführen des entsprechenden Körpers (7) des Elements (3) in die Aushöhlung (9) zuzulassen.

6. System nach Anspruch 5, **dadurch gekennzeichnet, dass** die Länge (14) der Aushöhlung (9) größer als die Breite (11, 13) der Durchlässe (10, 12) ist, wodurch im Übergangsbereich zwischen der Aushöhlung (9) und den Durchlässen (10, 12) zwei Schultern oder Zähne (15, 16) ausgebildet sind, die dazu geeignet sind, dem Körper (7) des Verbindungselements (3) entgegenzuwirken, sobald die Befestigung ausgeführt wurde, um zu verhindern, dass er aus der Aushöhlung des Gehäuses (5) austritt.

7. System nach einem der Ansprüche 5 oder 6, **dadurch gekennzeichnet, dass** die Breite (11) des seitlichen Durchlasses (10) im Wesentlichen gleich der Länge (8) des Körpers (7) ist.

8. System nach einem der Ansprüche 5 bis 7, **dadurch gekennzeichnet, dass** die Führungsmittel (6) mindestens eine Fläche (17) umfassen, die im seitlichen Durchlass angeordnet ist und durch Berührung mit dem Körper (7) des/der mindestens einen oder zwei Verbindungselemente (3) zusammenwirkt.

9. System nach Anspruch 8, **dadurch gekennzeichnet, dass** die mindestens eine Fläche (17) in der Nähe der Aushöhlung (9) des Gehäuses (5) angeordnet ist.

10. System nach einem der Ansprüche 8 oder 9, **dadurch gekennzeichnet, dass** die mindestens eine Fläche (17) in der Nähe des seitlichen Durchlasses (10) angeordnet ist.

11. System nach einem der Ansprüche 1 bis 10, **dadurch gekennzeichnet, dass** der Körper (7) im Wesentlichen zylindrisch ist und die Aushöhlung (9) im Wesentlichen zylindrisch ist.

12. Vorrichtung (100, 101, 102) zum Handhaben eines Akkumulators (500), umfassend mindestens ein Greifelement (50), **dadurch gekennzeichnet, dass** sie ein Befestigungssystem (1) nach einem der Ansprüche 1 bis 11 umfasst, das mit dem Greifelement (50) verbunden ist.

13. Vorrichtung nach Anspruch 12, **dadurch gekennzeichnet, dass** das/die mindestens eine oder zwei Verbindungselemente (3) des Systems (1) mit dem Greifelement (50) verbunden sind und dass das/die mindestens eine oder zwei Gehäuse (5) dazu geeignet sind, mit dem Akkumulator (500) verbunden zu werden.

14. Vorrichtung nach Anspruch 12, **dadurch gekennzeichnet, dass** das/die mindestens eine oder zwei Gehäuse (5) mit dem Greifelement (50) verbunden sind und dass das/die mindestens eine oder zwei Verbindungselemente dazu geeignet sind, mit dem Akkumulator verbunden zu werden.

15. Vorrichtung (100) nach einem der Ansprüche 12 bis 14, **dadurch gekennzeichnet, dass** das Greifelement (50) ein Abstandshalterelement (4) mit mindestens einem Abschnitt (41) umfasst, der mit den Enden von zwei weiteren im Wesentlichen parallelen Abschnitten (40) verbunden ist, von denen jeder an einem Ende mit mindestens einem des/der mindestens einen oder zwei Verbindungselemente (3) oder mit mindestens einem des einen oder der zwei Gehäuse ausgestattet ist.

16. Vorrichtung nach Anspruch 15, **dadurch gekennzeichnet, dass** das Abstandshalterelement eine derartige Elastizität aufweist, dass es den mindestens zwei Verbindungselementen und/oder mindestens einem der Gehäuse möglich ist, elastisch zueinander hin oder voneinander weg bewegt zu werden.

17. Vorrichtung (100) nach einem der Ansprüche 12 bis 16, **dadurch gekennzeichnet, dass** sie mindestens eine Drehachse (2) für die Vorrichtung aufweist, damit es der Vorrichtung möglich ist, sich von mindestens einer Ruhestellung geringster Platzinanspruchnahme zu mindestens einer zweiten Betriebstellung zu bewegen, damit sie gegriffen werden kann.

18. Akkumulator (500), umfassend eine Einhausung und eine Vorrichtung zu seiner Handhabe, **dadurch gekennzeichnet, dass** der Akkumulator eine Vorrichtung nach einem der Ansprüche 12 bis 17 umfasst.

19. Akkumulator nach Anspruch 18, **dadurch gekennzeichnet, dass** die Einhausung ein Fach aufweist, das dazu geeignet ist, die Vorrichtung (100, 101, 102) unterzubringen, wenn Letztere in der Ruhestellung angeordnet ist, wobei ihre Platzinanspruchnahme gemindert ist.

20. Akkumulator (500) nach Anspruch 19, **dadurch gekennzeichnet, dass** das Befestigungssystem teilweise im Deckel (501) des Behälters (502) der Einhausung bereitgestellt ist.

21. Akkumulator (500) nach einem der Ansprüche 18 bis 20, **dadurch gekennzeichnet, dass** die Abschnitte des am Akkumulator bereitgestellten Befestigungssystems zwischen einer Zelle und der nächsten des Akkumulators und/oder in gutem Abstand zu den abgedichteten Bereichen des Akkumulators angeordnet sind.

## Revendications

1. Système pour raccorder un accumulateur (500) à un dispositif (100, 101, 102) pour la manutention dudit accumulateur, ledit système pouvant tourner entre une position de repos essentiellement horizontale et au moins une position de fonctionnement essentiellement verticale du dispositif, ledit dispositif comprenant au moins un ou deux éléments de connexion (3) aptes à être logés dans au moins un ou deux logements correspondants (5), ledit système comprend en outre des moyens de guidage (6) aptes à guider ledit au moins un élément de connexion (3) durant l'application dudit dispositif (100, 101, 102) sur ledit accumulateur (500) pour le déplacer de sa position naturelle et dépasser un rétrécissement (10) dudit au moins un logement (5), en permettant l'insertion dans ledit au moins un logement (5) avec retour successif à la position naturelle, **caractérisé en ce que** lesdits au moins un ou deux éléments de connexion (3) comprennent un corps (7) apte à être logé dans une cavité correspondante (9) dudit logement correspondant (5), **en ce qu'**un bras s'étend dudit corps, et **en ce que** la partie supérieure de ladite cavité (9) définit un passage (12) ayant une largeur (11, 13) inférieure à la longueur (14) de ladite cavité, ledit passage étant donc apte à recevoir ledit bras dans sa position de fonctionnement essentiellement verticale.

2. Système (1) selon la revendication 1, **caractérisé en ce que** ledit au moins un corps (7) dudit élément de connexion (3) s'encastre avec claquement dans ledit au moins un logement (5), en permettant audit dispositif de tourner autour d'au moins un axe (2) de façon qu'il puisse être tourné entre ladite au moins position de repos et ladite au moins deuxième position de fonctionnement apte à permettre d'être saisi.

3. Système (1) selon l'une des revendications 1 et 2, **caractérisé en ce que** lesdits moyens de guidage (6) sont indiqués pour déplacer lesdits au moins deux éléments de connexion (3) durant l'application dudit dispositif (100, 101, 102) sur ledit accumulateur (500), de manière à permettre l'insertion desdits éléments de connexion (3) dans les logements correspondants (5).

4. Système selon l'une des revendications 1 et 2, **caractérisé en ce que** lesdits moyens de guidage (6) sont indiqués pour rapprocher réciproquement lesdits logements (5) durant l'application dudit dispositif (100, 101, 102) sur l'accumulateur (500), afin de consentir l'insertion des éléments de connexion correspondants (3).

5. Système selon l'une des revendications de 1 à 4, **caractérisé en ce que** lesdits au moins un ou deux logements (5) comprennent un passage latéral ultérieur (10) se développant latéralement de ladite cavité (9), et indiqué pour permettre l'insertion dans ladite cavité (9) dudit corps correspondant (7) dudit élément (3).

6. Système selon la revendication 5, **caractérisé en ce que** la longueur (14) de ladite cavité (9) est plus grande que la largeur (11, 13) desdits passages (10, 12) en formant ainsi dans la zone de transit entre ladite cavité (9) et lesdits passages (10, 12) deux épaulements ou dents (15, 16) indiqués pour s'opposer audit corps (7) dudit élément de connexion (3), une fois que le raccordement a été exécuté, afin d'empêcher que celui-ci puisse sortir de ladite cavité dudit logement (5).

7. Système selon l'une des revendications 5 et 6, **caractérisé en ce que** la largeur (11) dudit passage latéral (10) est essentiellement égale à la longueur (8) dudit corps (7).

8. Système selon l'une des revendications de 5 à 7, **caractérisé en ce que** lesdits moyens de guidage (6) comprennent au moins une surface (17) positionnée dans ledit passage latéral coopérant par contact avec le corps (7) desdits au moins un ou deux éléments de connexion (3).

9. Système selon la revendication 8, **caractérisé en ce qu'**au moins une surface (17) est positionnée près de ladite cavité (9) dudit logement (5).

10. Système selon l'une des revendications 8 et 9, **caractérisé en ce que** ladite au moins une surface (17) est positionnée près dudit passage latéral (10).

11. Système selon l'une des revendications de 1 à 10, **caractérisé en ce que** ledit corps (7) est essentiellement cylindrique et ladite cavité (9) est essentiellement cylindrique.

12. Dispositif (100, 101, 102) pour la manutention d'un accumulateur (500), comprenant au moins un élément de prise (50), **caractérisé en ce qu'**il comprend un système de raccordement (1) selon l'une des revendications de 1 à 1, relié audit élément de prise (50).

13. Dispositif selon la revendication 12, **caractérisé en ce que** lesdits au moins un ou deux éléments de connexion (3) dudit système (1) sont reliés audit élément de prise et **en ce que** lesdits au moins un ou deux logements (5) sont indiqués pour être reliés audit accumulateur (500).

14. Dispositif selon la revendication 12, **caractérisé en ce que** lesdits au moins un ou deux logements sont reliés audit élément de prise (50) et **en ce que** lesdits au moins un ou deux éléments de connexion sont indiqués pour être reliés audit accumulateur.

15. Dispositif (100) selon l'une des revendications de 12 à 14, **caractérisé en ce que** ledit élément de prise (50) comprend un élément d'espacement (4) avec au moins une partie (41) reliée aux extrémités de deux autres parties essentiellement parallèles (40), chacune munie sur une extrémité d'au moins un desdits au moins un ou deux éléments de connexion (3) ou au moins un desdits un ou deux logements.

16. Dispositif selon la revendication 15, **caractérisé en ce que** ledit élément d'espacement présente une élasticité telle qu'elle permet que lesdits au moins deux éléments de connexion et/ou au moins un desdits logements puissent être déplacés élastiquement ensemble ou séparemment.

17. Dispositif selon l'une des revendications de 12 à 16, **caractérisé en ce qu'**il comprend au moins un axe de rotation (2) pour ledit dispositif afin de permettre audit dispositif de se déplacer d'au moins une position de repos avec des dimensions d'encombrement minimales à au moins une deuxième position de fonctionnement afin de permettre la prise sur celui-ci.

18. Accumulateur (500) comprenant un boîtier et un dispositif pour la manutention de celui-ci, **caractérisé en ce que** ledit accumulateur comprend un dispositif selon l'une des revendications de 12 à 17.

19. Accumulateur selon la revendication 18, **caractérisé en ce que** ledit boîtier présente un compartiment apte à loger ledit dispositif (100, 101, 102) quand ce dernier se trouve dans ladite position de repos, en réduisant les dimensions d'encombrement de celui-ci.

20. Accumulateur (500) selon la revendication 19, **caractérisé en ce que** ledit système de raccordement est réalisé partiellement sur le couvercle (501) ou sur le conteneur (502) dudit boîtier.

21. Accumulateur (500) selon l'une des revendications de 18 à 20, **caractérisé en ce que** les parties dudit système de raccordement réalisées sur ledit accumulateur sont positionnées entre une cellule et une autre cellule dudit accumulateur et/ou éloignées des zones étanches dudit accumulateur.
